# FASCICULE DE BREVET EUROPEEN

(11) **EP 1 297 516 B1**
(45) Date de publication et mention de la délivrance du brevet: **06.04.2005**
(21) Numéro de dépôt: 01947540.9
(22) Date de dépôt: 20.06.2001
(51) Int. Cl.: G09B 21/00

(54) **ELEMENT A RELIEF EVOLUTIF**
ELEMENT MIT SKALIERBAREM RELIEF
ELEMENT WITH EXPANSIBLE RELIEF

(30) Priorité: 21.06.2000 FR 0007928
(43) Date de publication de la demande: 02.04.2003
(73) Titulaire: COMMISSARIAT A L'ENERGIE ATOMIQUE, 75752 Paris Cedex 15 (FR)
(72) Inventeur: FOURNIER, Raymond, F-91440 GOMETZ LE CHATEL (FR); RIWAN, Alain, F-34240 L'HAY LES ROSES (FR)
(74) Mandataire: Poulin, Gérard
(86) Numéro de dépôt international: PCT/FR2001/001926
(87) Numéro de publication internationale: WO 2001/099086

(56) Documents cités:
- EP-A- 0 663 633
- FR-A- 2 577 998
- US-A- 5 685 721
- KAWAI Y ET AL: "INTERACTIVE TACTILE DISPLAY SYSTEM - A SUPPORT SYSTEM FOR THE VISUALLY DISABLED TO RECOGNIZE 3D OBJECTS" ASSETS. ANNUAL ACM CONFERENCE ON ASSISTIVE TECHNOLOGIES,US,NEW YORK, ACM, vol. CONF. 2, 1996, pages 45-50, XP000683169 ISBN: 0-89791-776-6
- WAY P T ET AL: "AUTOMATIC VISUAL TO TACTILE TRANSLATION-PART I: HUMAN FACTORS, ACCESS METHODS, AND IMAGE MANIPULATION" IEEE TRANSACTIONS ON REHABILITATION ENGINEERING,US,IEEE INC. NEW YORK, vol. 5, no. 1, 1 mars 1997 (1997-03-01), pages 81-94, XP000685690 ISSN: 1063-6528

## Description

### Domaine technique

L'invention concerne un élément dont une face avant présente un relief évolutif, lui permettant notamment de retranscrire en relief une information tactile ou visuelle.

L'élément conforme à l'invention peut être utilisé dans de nombreux domaines. Parmi les applications possibles, on citera notamment la réalisation de systèmes de lecture du braille ou de représentation tactile d'informations graphiques pour des non-voyants ou la réalisation d'interfaces informatiques tels que des éléments aptes à restituer la texture d'objets ou de tissus, dans le cadre du commerce électronique. On citera également la réalisation d'écrans transparents en relief aptes à être superposés à des écrans de visualisation classiques.

### Etat de la technique

Comme l'illustrent notamment les documents FR-A-2 577 998 et EP-A-0 663 633, il est connu d'utiliser des actionneurs à cire pour commander différents organes (soupapes, distributeurs, etc.) dans des appareils électroménagers tels que des réfrigérateurs, des congélateurs, des lave-vaisselle ou des lave-linge. Ces actionneurs à cire se présentent sous la forme d'un vérin, dans lequel le déplacement d'une tige mobile formant piston est commandé par la variation de volume d'une cire renfermée dans une cavité hermétique. Ce changement de volume est dû à un changement d'état de la cire, généralement entre un état solide et un état liquide, produit par le franchissement d'un seuil de température prédéterminé. Le changement d'état de la cire est généralement réalisé en chauffant la cire, pour la faire passer de l'état solide à l'état liquide. Le phénomène est réversible.

Les cires susceptibles d'être utilisées dans un actionneur de ce type sont suffisamment nombreuses pour permettre de régler le point de fusion à volonté. En utilisant des cires courantes, l'augmentation de volume produite par le changement de phase est de l'ordre de 10 à 15 %. L'utilisation de cires spéciales permet même d'atteindre des augmentations de volume dépassant 20 %.

Les actionneurs à cire présentent l'avantage d'un très faible coût de production. De plus, ils peuvent développer des charges importantes pour des débattements très significatifs.

L'inconvénient essentiel des actionneurs à cire actuels concerne leur temps de réponse relativement long, dû à leur inertie thermique.

On connaît par ailleurs des éléments à relief évolutif, principalement utilisés dans des systèmes de lecture du braille pour les non voyants. Dans ces éléments, on utilise essentiellement des actionneurs magnétiques ou des actionneurs piézoélectriques agencés selon une matrice, pour faire évoluer le relief de la face avant de l'élément en fonction de l'information à transmettre.

Ces éléments existants ont pour inconvénients de présenter un coût relativement élevé et d'être de dimensions limitées. De plus, l'utilisation d'actionneurs magnétiques ou piézoélectriques leur donne une faible résolution. En d'autres termes, la texture du relief obtenu est relativement grossière. Enfin, ces actionneurs ne permettent pas d'envisager la réalisation d'écrans transparents en relief aptes à retranscrire des informations visuelles, en association avec des écrans de visualisation classiques.

### Exposé de l'invention

L'invention a précisément pour objet un élément à relief évolutif ne présentant pas les inconvénients des éléments existants et dont la conception originale lui permet notamment de pouvoir bénéficier de grandes dimensions, d'une résolution particulièrement fine, et autorisant la réalisation d'éléments transparents utilisables sur des écrans de visualisation classiques, pour un très faible coût.

Conformément à l'invention, ce résultat est obtenu au moyen d'un élément présentant une face avant à relief évolutif, l'élément comprenant des moyens individuels de modification du relief de la face avant, répartis selon un réseau régulier et des moyens de commande aptes à piloter séparément tous les moyens individuels de modification du relief de l'élément, caractérisé en ce que les moyens individuels de modification du relief comprennent des cavités étanches remplies d'un produit apte à changer de volume lors du franchissement d'un seuil de température prédéterminé, un organe déformable ou mobile séparant chaque cavité de la face avant, et un moyen de chauffage individuel du produit contenu dans chaque cavité, et dans lequel les moyens de chauffage sont des organes chauffants pilotés par un courant électrique et les moyens de commande sont connectés à ces organes chauffants par des conducteurs électriques présentant une implantation matricielle.

L'agencement dans l'élément d'une matrice de dispositifs comparables aux actionneurs à cire utilisés classiquement dans les appareils électroménagers et le pilotage séparé de chacun de ces dispositifs permettent d'obtenir les résultats annoncés. En particulier, un élément ainsi conçu est particulièrement peu onéreux, ne présente pas de limite de taille et met en oeuvre des technologies qui se prêtent bien à la miniaturisation et autorisent, par conséquent, la réalisation d'éléments présentant une très grande finesse dans la représentation de surfaces texturées.

Par ailleurs, l'utilisation d'un produit et de matériaux transparents permet de réaliser un élément en relief également transparent. Un tel élément peut se superposer à un écran de visualisation classique pour retranscrire en relief une information visuelle.

Parallèlement à cette dernière application, l'élément selon l'invention peut être appliqué, de façon plus classique, à la transcription en relief d'une information tactile. On peut ainsi réaliser des systèmes de lecture du braille pour les non-voyants, des interfaces informatiques, ou des éléments aptes à reconstituer la texture d'objets ou de tissus pour les applications de commerce électronique.

Selon le cas, les conducteurs électriques peuvent soit traverser une paroi arrière, de préférence rigide, de l'élément, soit être supportés par un substrat, de préférence rigide tel qu'un circuit imprimé sur lequel est formée la face arrière de l'élément.

Dans un premier mode de réalisation de l'invention, les cavités sont délimitées par des perforations formées dans une plaque de préférence rigide.

Dans ce cas, l'organe déformable ou mobile comprend soit un piston apte à coulisser dans chaque perforation, du côté de la face avant de l'élément, soit une membrane élastique recouvrant la plaque rigide du côté de la face avant de l'élément, de façon à fermer hermétiquement les perforations. Dans le premier cas, un moyen de rappel peut être associé à chaque piston, pour le ramener automatiquement vers une position de repos, lorsque le produit contenu dans la cavité correspondante est refroidi.

Dans un deuxième mode de réalisation de l'invention, les cavités sont délimitées intégralement dans une membrane élastique dont une face avant forme la face avant de l'élément.

Afin d'accélérer le refroidissement du produit contenu dans une cavité donnée après la mise en oeuvre des moyens de chauffage correspondants, des moyens de refroidissement forcé de ce produit, tels qu'un circuit de fluide réfrigérant, sont avantageusement prévus.

Selon un perfectionnement avantageux de l'invention, au moins un capteur de température est utilisé pour mesurer la température globale. Les moyens de commande sont alors sensibles à un signal délivré par ce capteur pour réguler globalement le pilotage des moyens de chauffage, c'est-à-dire notamment le courant de repos et le courant d'activation global des moyens de chauffage lorsque ceux-ci sont constitués par des organes chauffants pilotés par un courant électrique.

En variante, un capteur de température locale peut mesurer la température de chaque moyen de chauffage. Les moyens de commande sont alors sensibles à un signal délivré par chacun des capteurs pour réguler localement le pilotage de chaque moyen de chauffage, c'est-à-dire notamment le courant de repos et le courant d'activation individuel de chacun des moyens de chauffage, lorsque ceux-ci sont constitués par des organes chauffants pilotés par un courant électrique.

Dans une autre variante de réalisation, les moyens de commande utilisent la mesure du courant traversant les organes chauffant et la tension aux bornes de ces organes pour estimer leur température et réguler un courant de repos et un courant d'activation des organes chauffant.

### Brève description des dessins

On décrira à présent, à titre d'exemples non limitatifs, différents modes de réalisation de l'invention, en se référant aux dessins annexés, dans lesquels :
- la figure 1 est une vue en coupe qui représente schématiquement, à grande échelle, une partie d'un élément en relief illustrant un premier mode de réalisation de l'invention ;
- la figure 2 est une vue comparable à la figure 1, illustrant une variante du premier mode de réalisation de l'invention ;
- la figure 3 est une vue en coupe comparable aux figures 1 et 2, illustrant un deuxième mode de réalisation de l'invention ; et
- la figure 4 illustre schématiquement la commande matricielle des organes chauffants utilisés dans les éléments des figures 1 à 3.

### Description détaillée de plusieurs modes de réalisation préférés de l'invention

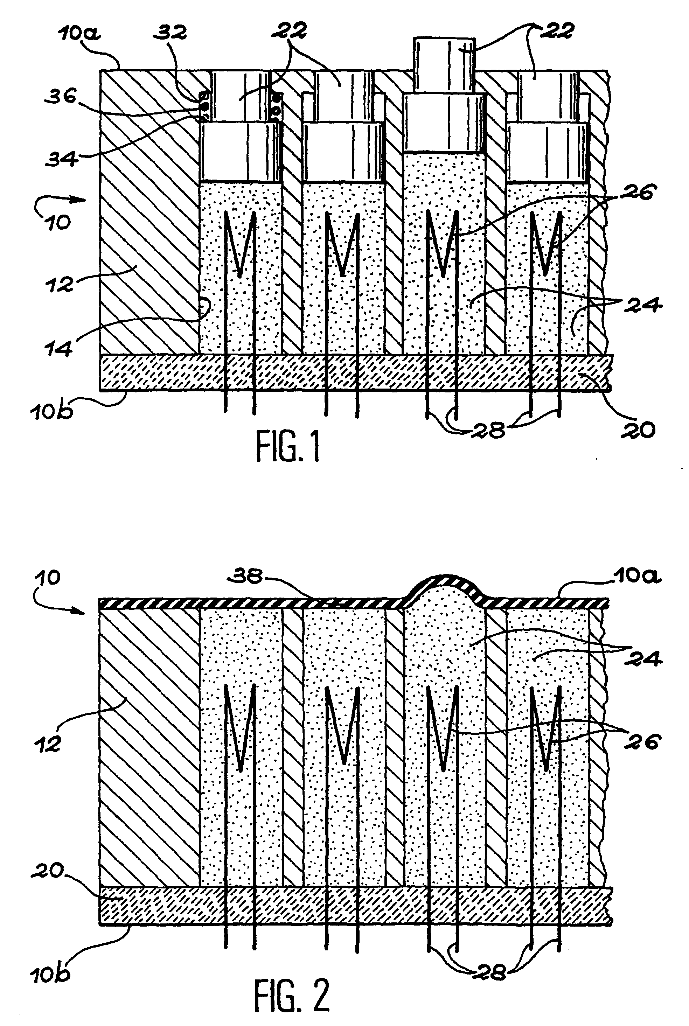

La figure 1 représente schématiquement une partie d'un élément à relief superficiel évolutif selon un premier mode de réalisation de l'invention. Pour faciliter la compréhension, l'épaisseur de cet élément en forme de panneau, est, volontairement très accentuée sur cette figure. Dans la pratique, cette épaisseur est, par exemple, sensiblement égale à 1 ou 2 mm.

L'élément 10 présente une face avant 10a, à relief évolutif, prévue pour être tournée vers l'extérieur, et une face arrière 10b.

L'élément 10 illustré sur la figure 1 comprend une plaque rigide 12, réalisée par exemple en métal ou en tout autre matériau adapté. La plaque 12 représentée sur la figure 1 est plane ; toutefois, une plaque de forme différente (bombée, en creux, etc.) peut être utilisée, selon l'application envisagée, sans sortir du cadre de l'invention.

Des perforations 14 sont réalisées dans la plaque 12, selon un réseau régulier, de façon à former une matrice de perforations dans ladite plaque. Le réseau formé par la matrice de perforation 14 peut être un réseau à pas carré, triangulaire ou autre, sans sortir du cadre de l'invention.

Les perforations 14 sont généralement toutes de mêmes dimensions et présentent par exemple, bien que de façon non limitative, une section circulaire. Toutes les perforations 14 débouchent sur une face avant et sur une face arrière de la plaque 12. La face avant de la plaque 12 forme la face avant 10a de l'élément 10.

L'élément 10 comprend de plus une paroi arrière rigide 20, appliquée et fixée de façon étanche contre la face arrière 18 de la plaque 12. Dans la pratique, la paroi arrière 20 peut être constituée, par exemple, soit par une résine obturant les extrémités correspondantes des perforations 14, soit par un film d'un matériau tel que ceux constituant des circuits intégrés présentant avantageusement un coefficient de conduction de la chaleur élevé. La paroi 20 est fixée à la plaque 12 par tout moyen approprié assurant l'étanchéité des perforations 14 (collage, etc.).

Dans le mode de réalisation de l'invention illustré sur la figure 1, un organe mobile tel qu'un piston 22 est logé de façon coulissante dans la partie de chacune des perforations 14 débouchant sur la face avant 10a. Plus précisément, chacun des organes mobiles 22 obture hermétiquement la perforation 14 correspondante du côté de la face avant 10a.

Chacune des perforations 14 délimite ainsi intérieurement une cavité 24 hermétiquement fermée, entre la paroi arrière 20 et l'organe mobile 22. Cette cavité 24 est remplie d'un produit apte à changer de volume lors du franchissement d'un seuil de température prédéterminé. Ce produit peut notamment être constitué par une cire qui est à l'état solide à température ambiante et à l'état liquide lorsque la température s'élève au-dessus d'un seuil de température prédéterminé, et dont le volume augmente automatiquement lors de son changement de phase de l'état solide à l'état liquide, et inversement. Une telle cire est comparable aux cires mises en oeuvre dans les actionneurs à cire existants utilisés dans certains appareils électroménagers. Toutefois, de façon plus générale, le produit contenu dans chacune des cavités 24 peut être constitué par tout autre produit présentant les caractéristiques requises tel qu'un polymère, un alliage à mémoire de forme, etc.

Lorsque le produit contenu dans les cavités 24 est une cire, le choix de celle-ci permet de régler à volonté le seuil de température pour lequel le changement de volume se produit, ainsi que l'amplitude de ce changement de volume. Cette amplitude est généralement comprise entre 10 et 15 %, mais peut dépasser 20 % dans certains cas.

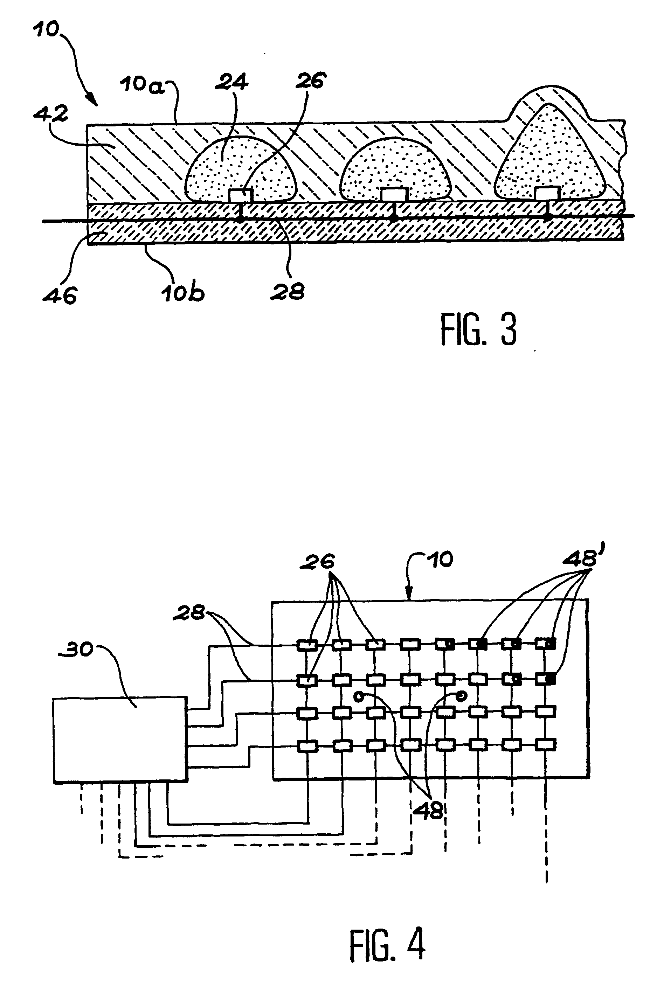

Afin d'assurer le franchissement du seuil de température propre au produit contenu dans les cavités 24, un moyen de chauffage 26 de ce produit est placé dans chacune desdites cavités. Dans le mode de réalisation illustré plus précisément sur la figure 1, ce moyen de chauffage 26 est un organe chauffant de type fil résistant, piloté par un courant électrique acheminé jusqu'à l'organe chauffant par des conducteurs électriques 28. Ces conducteurs électriques 28 traversent la paroi arrière rigide 20 de l'élément 10. Ils forment une matrice permettant d'alimenter séparément à volonté chacun des organes chauffants individuels 26 à partir d'une unité de commande 30, comme on l'a illustré schématiquement sur la figure 4.

Lorsque l'élément 10 n'est pas utilisé, aucun des organes chauffants 26 n'est alimenté électriquement. Le produit contenu dans les cavités 24 occupe alors son état initial correspondant par exemple à sa phase solide dans le cas d'une cire. Dans ces conditions, le volume de produit contenu dans chacune des cavités 24 est tel que les extrémités des organes mobiles 22 tournées vers la face avant 10a affleurent cette face. Dans cet état initial, la face avant 10a ne présente donc aucun relief.

Lorsqu'un ou plusieurs des organes chauffants 26 sont alimentés électriquement par l'unité de commande 30, ces organes 26 chauffent le produit contenu dans les cavités 24 correspondantes, de façon telle que ce produit franchisse le seuil de température pour lequel il change d'état. Dans le cas où le produit est une cire, il passe en phase liquide. Ce changement d'état a pour conséquence un accroissement sensible de son volume. Il en résulte un déplacement du ou des organes mobiles 22 correspondants vers la face avant 10a de l'élément. Le ou les organes mobiles 22 concernés font alors saillie sur cette face avant 10a, sur une distance prédéterminée (par exemple, environ 200 microns), comme on l'a illustré sur la figure 1 pour le deuxième organe en partant de la droite.

L'agencement décrit permet ainsi de faire évoluer à volonté le relief de la face avant 10a de l'élément, afin de retranscrire en relief sur cette face une information quelconque. Comme on l'a déjà indiqué, cette information peut notamment être exploitée de manière tactile par des non-voyants, par exemple pour permettre une lecture en braille, pour servir d'interface informatique, ou par des voyants, dans le cadre d'applications de commerce électronique.

L'information retranscrite en relief sur la face avant 10a de l'élément peut aussi être de nature visuelle. Dans ce cas, le produit et les différentes pièces telles que la plaque 12, les organes mobiles 22 et la paroi arrière 20 peuvent être réalisés en des matériaux transparents. On réalise ainsi un écran transparent à relief évolutif susceptible d'être placé sur un écran de visualisation classique.

Afin d'améliorer le temps de réponse de l'élément 10, le retour individuel de chacun des organes mobiles 22 vers son état initial peut être accéléré en associant à chacun de ces organes un moyen de rappel tel qu'un ressort de compression 36 interposé entre des épaulements en vis-à-vis 32 et 34 formés respectivement dans chacune des perforations 14 et sur chacun des organes mobiles 22. Pour simplifier, le ressort 36 n'a été illustré que dans la perforation 14 de gauche sur la figure 1.

Egalement, afin de réduire le temps de réponse de l'élément, on diminue avantageusement l'inertie thermique qui ralentit le retour des organes mobiles 22 dans leur état initial lorsque les organes chauffants 26 ne sont plus alimentés. A cet effet, on réalise la paroi arrière 20 en un matériau présentant un coefficient de conduction de la chaleur élevé, comme on l'a déjà mentionné.

Afin d'améliorer encore l'évacuation de la chaleur produite par les organes chauffants 26, lorsqu'ils cessent d'être alimentés, on peut intégrer à la paroi arrière 20 des moyens de refroidissement forcé, associés individuellement à chacun des organes chauffants 26. ces moyens de refroidissement forcé sont, par exemple, à circulation de fluide. Ils sont alors reliés à un système de refroidissement (non représenté) extérieur à l'élément.

Bien que les organes mobiles 22 soient représentés sous la forme de pistons étagés sur la figure 1, ces organes peuvent aussi être constitués par des pistons cylindriques de section uniforme, sans sortir du cadre de l'invention.

Dans une variante de réalisation illustrée sur la figure 2, les organes mobiles 22 sont supprimés et remplacés par une membrane élastique unique 38, qui recouvre l'ensemble de la face avant de la plaque 12. La membrane élastique 38 est alors fixée de façon étanche sur la plaque 12, par exemple par collage, de façon à obturer hermétiquement les perforations 14. Dans ce cas, la face avant 10a de l'élément 10 est constituée par la face de la membrane élastique 38 tournée vers l'extérieur.

Dans cette variante de réalisation, le changement de volume du produit contenu dans les cavités 24 se traduit par une déformation de la membrane élastique 38 vers l'extérieur de l'élément 10, en face des perforations 14 concernées, comme on l'a représenté pour la deuxième perforation en partant de la droite sur la figure 2.

Le matériau constituant la membrane 38 est choisi suffisamment élastique, voire supra-élastique, pour permettre de ramener en position initiale le produit contenu dans les cavités 24, lors de son refroidissement.

Cette variante de réalisation est préférée à la précédente, du fait de sa facilité de mise en oeuvre.

Dans un deuxième mode de réalisation de l'invention, illustré sur la figure 3, les cavités 24 contenant le produit apte à changer de volume lors du franchissement d'un seuil de température prédéterminé sont réalisées directement dans une membrane élastique 42. Dans ce cas, les cavités 24 ne débouchent pas sur la face avant de la membrane élastique 42, formant la face avant 10a de l'élément 10. Par conséquent, comme dans la variante de la figure 2, chaque cavité 24 est séparée de la face avant 10a de l'élément par un organe déformable, constitué dans ce cas par une partie de la membrane 42.

La face arrière de la membrane élastique 42 est fixée de façon étanche, par exemple par collage, sur un substrat rigide 46 sur lequel est formée la face arrière 10b de l'élément 10. Le substrat rigide 46 porte, sur sa face tournée vers la membrane élastique 42, des moyens de chauffage 26 reçus individuellement dans chacune des cavités 24. Ces moyens de chauffage 26 sont avantageusement constitués par des organes chauffants pilotés par un courant électrique. Dans ce cas, le courant électrique peut notamment être acheminé séparément jusqu'à chacun des organes chauffants individuels 26 par des conducteurs électriques 28 implantés directement dans le substrat rigide 46. Celui-ci se présente alors, par exemple, sous la forme d'un circuit imprimé.

Les organes chauffants 26 ainsi que les conducteurs électriques 28 sont implantés de façon matricielle, sous la forme illustrée sur la figure 4, comme dans le cas du premier mode de réalisation décrit et de sa variante.

Dans le mode de réalisation de la figure 3, les cavités 24 présentent une forme non cylindrique, comparable à une bulle. Cette forme est déterminée de façon à engendrer une déformation aussi importante que possible des organes déformables de la membrane 42, qui séparent les cavités 24 de la face avant 44, lors d'un changement de volume du produit.

Le mode de réalisation de la figure 3 est préféré aux précédents, du fait que la réalisation de l'élément est encore plus simple que dans la variante de la figure 2.

Dans tous les modes de réalisation, des moyens peuvent être prévus avantageusement pour limiter les excursions en température des cellules actives constituées par les cavités 24 remplies de produit de part et d'autre du seuil de température correspondant au changement de phase dudit produit, en tenant compte des phénomènes d'hystérésis. Ces moyens de limitation visent à assurer une dynamique suffisante au système, en tenant compte du fait que les excursions en température sont très dépendantes de la température ambiante et de la température globale du système complet, qui dépend aussi de son utilisation.

Les moyens pour limiter les excursions en température des cellules actives comprennent alors des moyens de régulation de la température utilisant les signaux délivrés par un ou plusieurs capteurs de température.

Selon un premier agencement possible, un ou plusieurs capteurs de température 48 (figure 4) mesurent la température globale de l'élément 10. L'unité de commande 30 est alors sensible aux signaux délivrés par chaque capteur de température 48 pour réguler globalement le pilotage des moyens de chauffage 26. Dans le cas où ces moyens de chauffage sont constitués par des organes chauffants pilotés par un courant électrique comme on l'a décrit précédemment, l'unité de commande 30 module le courant de repos et le courant d'activation envoyés dans les organes chauffants, en fonction de la température globale mesurée par le ou les capteurs 48 intégrés dans l'élément 10.

Selon un deuxième agencement possible, un capteur de température 48' (figure 4) est intégré localement dans chacune des cellules 24, et notamment dans chacun des moyens de chauffage 26. Les signaux délivrés par les capteurs 48' sont transmis à l'unité de commande 30 et celle-ci régule localement la température en régulant localement le pilotage de chaque moyen de chauffage 26. Dans le cas décrit où les moyens de chauffage 26 sont des organes chauffants pilotés par un courant électrique, l'unité de commande 30 module localement le courant de repos et le courant d'activation envoyés dans cet organe chauffant.

Dans une autre variante de réalisation (non représentée) les capteurs de température sont supprimés et la valeur de la température est déduite de la mesure du courant traversant l'organe chauffant et de la tension aux bornes de cet organe. Sur la base de cette information, l'unité de commande 30 module le courant de repos et le courant d'activation envoyés dans les organes chauffants.

Il est à noter que de tels moyens de régulation de la température peuvent être utilement associés à des moyens de refroidissement actifs tels que décrits précédemment, afin d'améliorer encore la diffusion de la chaleur vers l'extérieur de l'élément. Quel que soit le mode de réalisation de l'élément conforme à l'invention, celui-ci peut être réalisé à très faible coût. De plus, la taille de l'élément n'est pas limitée et il est possible de réaliser des écrans en relief de grandes dimensions.

D'autre part, le réglage de la température d'activation peut être accessible à l'utilisateur, ce qui permet de régler cette température en fonction des conditions d'utilisation.

Par ailleurs, la technologie proposée se prête bien à la miniaturisation. En particulier, l'élément peut être réalisé par des techniques de micro-usinage. Il est alors possible d'obtenir une très grande finesse dans la représentation de surfaces texturées.

Enfin, comme on l'a observé à propos du premier mode de réalisation décrit en référence à la figure 1, l'élément conforme à l'invention permet de réaliser des écrans transparents à relief évolutif susceptibles d'être superposés à des écrans de visualisation classiques. Cette possibilité concerne tous les modes de réalisation possibles de l'invention, à condition que les matériaux et le produit utilisés soient transparents.

## Revendications

1. Elément (10) présentant une face avant (16,40,44) à relief évolutif, l'élément comprenant des moyens individuels de modification du relief de la face avant, répartis selon un réseau régulier et des moyens de commande (28,30) aptes à piloter séparément tous les moyens individuels de modification du relief de l'élément (10), **caractérisé en ce que** les moyens individuels de modification du relief comprennent des cavités étanches (24) remplies d'un produit apte à changer de volume lors du franchissement d'un seuil de température prédéterminé, un organe (22,38,42) déformable ou mobile séparant chaque cavité de la face avant (10a), et un moyen de chauffage individuel (26) du produit contenu dans chaque cavité (24), et dans lequel les moyens de chauffage sont des organes chauffants (26) pilotés par un courant électrique et les moyens de commande sont connectés à ces organes chauffants (26) par des conducteurs électriques (28) présentant une implantation matricielle.

2. Elément selon la revendication 1, dans lequel les conducteurs électriques (28) traversent une paroi arrière (20) de l'élément (10).

3. Elément selon la revendication 1, dans lequel les conducteurs électriques (28) sont supportés par un substrat (46) sur lequel est formée une face arrière (10b) de l'élément (10).

4. Elément selon l'une quelconque des revendications précédentes, dans lequel les cavités (24) sont délimitées par des perforations (14) formées dans une plaque (12).

5. Elément selon la revendication 4, dans lequel l'organe déformable ou mobile comprend un piston (22) apte à coulisser dans chaque perforation (14), du côté de la face avant (10a) de l'élément (10), de façon à fermer hermétiquement les perforations (14).

6. Elément selon la revendication 5, dans lequel un moyen de rappel (36) est associé à chaque piston (22), pour le ramener automatiquement vers une position de repos.

7. Elément selon la revendication 4, dans lequel l'organe déformable ou mobile comprend une membrane élastique (38) recouvrant ladite plaque (12) du côté de la face avant (10a) de l'élément (10), de façon à fermer hermétiquement les perforations (14).

8. Elément selon l'une quelconque des revendications 1 à 3, dans lequel les cavités (24) sont délimitées intégralement dans une membrane élastique (42) dont une face avant forme la face avant (10a) de l'élément (10).

9. Elément selon l'une quelconque des revendications précédentes, dans lequel au moins un capteur de température (48,48') mesure la température globale ou locale de l'élément (10) et les moyens de commande (30) sont sensibles à un signal délivré par chaque capteur (48,48') pour réguler globalement ou localement le pilotage des moyens de chauffage (26).

10. Elément selon la revendication 9, combinée avec l'une quelconque des revendications 1 à 3, dans lequel les moyens de commande (30) régulent globalement ou localement un courant de repos et un courant d'activation des organes chauffants (26).

11. Elément selon l'une quelconque des revendications 1 à 3, dans lequel les moyens de commande (30) utilisent la mesure du courant traversant les organes chauffants (26) et la tension aux bornes de ces organes pour estimer leur température et réguler un courant de repos et un courant d'activation des organes chauffant (26).

## Patentansprüche

1. Element (10) mit einer Vorderseite (16,40,44) mit entwickelbarem Relief, wobei das Element entsprechend einem gleichmäßigen Gitter verteilte individuelle Einrichtungen zum Modifizieren des Reliefs auf der Vorderseite umfasst und Steuereinrichtungen (28, 30), die fähig sind, alle individuellen Einrichtungen zum Modifizieren des Reliefs des Elements (10) einzeln zu steuern,
**dadurch gekennzeichnet, dass** die Einzeleinrichtungen zur Modifizierung des Reliefs dichte Hohlräume (24), gefüllt mit einem Produkt, das beim Überschreiten einer festgelegten Temperaturschwelle sein Volumen ändert, verformbare oder bewegliche Mittel (22, 38, 42), die jeden Hohlraum von der Vorderseite (10a) trennen, und eine individuelle Heizeinrichtung (26) des in jedem Hohlraum (24) enthaltenen Produkts umfassen,
und bei dem die Heizeinrichtungen Heizorgane (26) sind, die durch einen elektrischen Strom gesteuert werden, und die Steuereinrichtungen mit diesen Heizorganen (26) durch elektrische Leiter (28) verbunden sind die eine matrixartige Anordnung aufweisen.

2. Element nach Anspruch 1, bei dem die elektrischen Leiter (28) eine Rückwand (20) des Elements (10) durchqueren.

3. Element nach Anspruch 1, bei dem die elektrischen Leiter (28) durch ein Substrat (46) getragen werden, das eine Rückseite (10b) des Elements (10) bildet.

4. Element nach einem der vorangehenden Ansprüche, bei dem die Hohlräume (24) in einer Platte (12) ausgebildete Perforationen (14) umfassen.

5. Element nach Anspruch 4, bei dem das verformbare oder bewegliche Mittel Kolben (22) umfasst, imstande in jeder Perforation (14) in Richtung Vorderseite (10a) des Elements (10) zu gleiten, um die Perforationen (14) hermetisch zu verschließen.

6. Element nach Anspruch 5, bei dem jedem Kolben (22) eine Rückstelleinrichtung (36) zugeordnet ist, um ihn automatisch in eine Ruhestellung zurückzustellen.

7. Element nach Anspruch 4, bei dem das verformbare oder bewegliche Mittel eine elastische Membran (38) umfasst, welche die genannte Platte (12) auf der Vorderseite (10a) des Elements (10) abdeckt, um die Perforationen (14) hermetisch zu verschließen.

8. Element nach einem der Ansprüche 1 bis 3, bei dem die Hohlräume (24) vollständig von einer elastischen Membran (42) abgegrenzt werden, deren Vorderseite die Vorderseite (10a) des Elements (10) bildet.

9. Element nach einem der vorangehenden Ansprüche, bei dem wenigstens ein Temperatursensor (48, 48') die globale oder lokale Temperatur des Elements (10) misst und die Steuereinrichtungen (30) empfindlich sind für ein durch jeden Sensor (48, 48') geliefertes Signal, um das Steuern der Heizeinrichtungen (26) global oder lokal zu regeln.

10. Element nach Anspruch 9, kombiniert mit einem der Ansprüche 1 bis 3, bei dem die Steuereinrichtungen (30) einen Ruhestrom und einen Aktivierungsstrom der Heizorgane (26) global oder lokal regeln.

11. Element nach einem der Ansprüche 1 bis 3, bei dem die Steuereinrichtungen (30) die Messung des die Heizorgane (26) durchquerenden Stroms und die Spannung an den Anschlüssen dieser Organe benutzen, um ihre Temperatur zu schätzen und einen Ruhestrom und einen Aktivierungsstrom der Heizorgane (26) zu regeln.

## Claims

1. Element (10) with a front face (16, 40, 44) with evolutive relief, the element comprising individual means for modifying the relief of the front face (10a) distributed in a regular pattern and control means (28, 30) able to separately control all the individual means for modifying the relief of the element (10), **characterized in that** the individual relief modification means comprise sealed cavities (24) filled with a product able to change volume on crossing a predetermined temperature threshold, a deformable or mobile member (22, 38, 42) separating each cavity (24) from the front face, and a means (26) for the individual heating of the product contained in each cavity (24), and wherein the heating means are heating members (26) controlled by an electric current and the control means are connected to said heating members by electrical conductors having a matrix layout.

2. Element according to claim 1, wherein the electrical conductors (28) cross a rear wall (20) of the element (10).

3. Element according to claim 1, wherein the electrical conductors (28) are supported by a substrate (46) on which a rear face (10b) of the element 910) is formed.

4. Element according to any one of the preceding claims, wherein the cavities (24) are defined by perforations (14) formed in a plate (12).

5. Element according to claim 4, wherein the deformable or mobile organ comprises a piston (22) able to slide in each perforation (14), on the side of the front face (10a) of the element (10), in such a way as to close the perforations (14) hermetically.

6. Element according to claim 5, wherein a recall means (36) is associated with each piston (22), to return it automatically to an idle position.

7. Element according to claim 4, wherein the deformable or mobile organ comprises an elastic membrane (38) covering said plate (12) on the side of the front face (10a) of the element (10), in such a way as to close the perforations (14) hermetically.

8. Element according to any one of claims 1 to 3, wherein the cavities (24) are integrally defined within an elastic membrane (42) with one front face forming the front face (10a) of the element (10).

9. Element according to any one of the preceding claims, wherein at least one temperature sensor (48, 48') measures the overall or local temperature of the element (10) and the control means (30) are sensitive to a signal delivered by each sensor (48, 48') to adjust, overall or locally, controlling of the heating means (26).

10. Element according to claim 9, combined with any one of claims 1 to 3, wherein the control means (30) adjust, overall or locally, an idle current and an activation current for the heating organs (26).

11. Element according to any one of claims 1 to 3, wherein the control means (30) use the measurements of the current crossing the heating organs (26) and the voltage at the terminals of these organs to estimate their temperature and to adjust an idle current and an activation current for the heating organs (26).
